# EUROPEAN PATENT APPLICATION

(11) **EP 4 036 416 A1**
(43) Date of publication of application: **03.08.2022**
(21) Application number: 20867291.5
(22) Date of filing: 10.09.2020
(51) Int. Cl.: F04D 19/04, F16C 32/04

(54) **VACUUM PUMP AND ACCESSORY UNIT OF VACUUM PUMP**

(30) Priority: 27.09.2019 JP 2019177665
(71) Applicant: Edwards Japan Limited, Yachiyo-shi, Chiba 276-8523 (JP)
(72) Inventor: FUKAMI, Hideo, Yachiyo-shi Chiba 276-8523 (JP); KASAHARA, Kazuya, Yachiyo-shi Chiba 276-8523 (JP); OGAWA, Tomomasa, Yachiyo-shi Chiba 276-8523 (JP)
(74) Representative: Totman, Clare Elizabeth
(86) International application number: PCT/JP2020/034352
(87) International publication number: WO 2021/060003

(57) **Abstract**

A vacuum pump and an accessory unit of the vacuum pump for which there is no need of adjustment with respect to an operation schedule on an apparatus side, and for which version upgrade of built-in software and a change in setting data can be performed easily even if a personal computer cannot be brought into a site, are provided.

In a built-in software and the like storage-portion of an optional device, new-version software and modules for updating software currently stored in a magnetic-bearing control portion, a motor driving/control portion, and a protection-function processing portion are stored. Moreover, new parameters for updating parameters such as a setting value, an alarm value and the like currently stored in setting parameter are also stored. An application program or a parameter read out of the built-in software and the like storage-portion is sent by a user-interface processing portion to a built-in software update processing portion, and various programs and data are updated by this built-in software update processing portion.

## Description

The present invention relates to a vacuum pump and an accessory unit of the vacuum pump and particularly to a vacuum pump and an accessory unit of the vacuum pump for which there is no need of adjustment with respect to an operation schedule on an apparatus side, and for which version upgrade or a change in setting data of built-in software can be performed easily even when a personal computer cannot be brought into a work site.

With recent further development of electronics, demand for semiconductors such as memories and integrated circuits has rapidly increased.

These semiconductors are manufactured by doping impurities to a semiconductor substrate having extremely high purity so as to impart electric characteristics, and by forming a fine circuit on the semiconductor substrate by etching or the like.

These works need to be performed in a chamber in a highly vacuum state in order to avoid an influence by dusts and the like in the air. In general, v vacuum pump is used for exhaustion in this chamber, and a turbo-molecular pump, which is one of the vacuum pumps, is used in many cases in view of less residual gas and ease in maintenance and the like.

Moreover, a manufacturing process of the semiconductor includes many processes of acting various process gases on semiconductor substrates, hence the turbo-molecular pump is used not only for vacuuming an inside of the chamber but also for exhaustion of these process gases from the inside of the chamber.

This turbo-molecular pump is constituted by a pump main body and a control device which controls the pump main body. And conventionally, a system is disclosed in which a host computer is connected to this control device, and software for executing pump control, such as monitoring of a pump control state and a start/stop or the like via a communication interface built in this control device, is stored/held in advance in a recording medium in the control device (see Japanese Patent Application Publication No. 2010-270599).

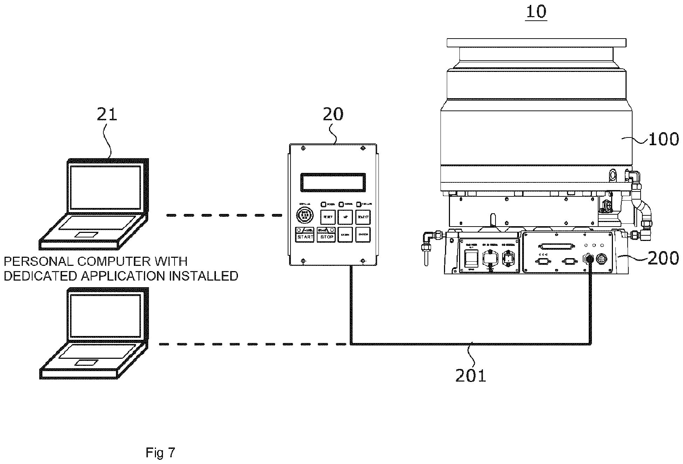

In the turbo-molecular pump, version upgrade or a change in setting data may be performed for the built-in software after installation, for addition of functions, actions to address a failure, a change in specification or the like. In this case, as shown in FIG. 7, processing is executed by connecting a personal computer 21 to a control device 200 via a communication cable 201. Alternatively, when an optional device 20 for remote operation of monitoring/control of a pump main body 100 is connected to this control device 200, the personal computer 21 is connected to this optional device 20 so as to execute such processing.

When such processing is to be executed, a turbo-molecular pump 10 basically needs to be returned to a service site for the work and an operation thereof needs to be stopped for a while. In this case, the pump main body 100 is removed from the device such as the vacuum chamber or the like and thus, the vacuum system is separated or disassembled for a while, and the vacuum state is canceled (released to the atmospheric air) .

After that, it is necessary to check if there is no gas leakage after the pump main body 100 is connected again, which makes the work cumbersome.

Thus, the pump is taken care of at the site without removing the pump main body 100 with a consent of a customer in some cases.

However, even in this case, the pump needed to be stopped for a while, though the vacuum system is not separated or disassembled, and the adjustment with respect to the operation schedule of the apparatus is needed. Therefore, in the maintenance on the apparatus side, a worker needed to go to the site and to perform version upgrade such as addition of functions and the like in accordance with timing of the stop of the apparatus or the like.

Moreover, a case has been increased recently in which a personal computer cannot be brought into the site in view of security, and a system is desired in which the version upgrade of the built-in software and the change in the setting data can be performed accurately even in such a situation.

The present invention has been made in view of the conventional problems as above and has an object to provide a vacuum pump and an accessory unit of the vacuum pump for which there is no need of adjustment with respect to the operation schedule on the apparatus side and for which the version upgrade of the built-in software and a change in the setting data can be performed easily even if a personal computer cannot be brought into the site.

Thus, the present invention (claim 1) is an invention of a vacuum pump including a pump main body, a control device which stores an application for controlling and monitoring the pump main body and a setting parameter used during an operation of the application, and a storage portion which stores at least one of an upgrade application for upgrade of the application and an upgrade setting parameter for upgrade of the setting parameter, wherein, when the pump main body is started, the upgrade application or the upgrade setting parameter is read out of the storage portion, and the application or the setting parameter stored in the control device is updated.

The storage portion which stores at least one of the upgrade application and the upgrade setting parameter is provided. And when the pump main body is started, the upgrade application or the upgrade setting parameter is read out of the storage portion, and the application or the setting parameter stored in the control device is updated.

An upgrade application program and the upgrade setting parameter only need to be installed in the storage portion in advance, and the application program and parameter are read out at a next start of the pump and are automatically updated. And after this update, the start of the pump is continued. Thus, there is no more need to make adjustment or the like with respect to the schedule of maintenance on the apparatus side for the pump stop, and the worker can perform a work at arbitrary timing regardless of the schedule.

Moreover, at the update of the application program or parameter, there is no more need to separate or disassemble the vacuum system.

Moreover, the present invention (claim 2) is an invention of a vacuum pump, wherein the storage portion is provided in an accessory unit capable of executing at least one of the controlling and monitoring the pump main body via the control device.

The accessory unit includes a storage portion which stores the upgrade application and the upgrade setting parameter.

As a result, the application program or the parameter can be updated without specially providing a storage device which updates the application program or the parameter in the control device. Since it is only necessary that the accessory unit which is an external device is mounted, it can be applied also to existing devices or the like.

Moreover, the present invention (claim 3) is an invention of a vacuum pump which is constituted by including storing means for installing and storing the upgrade application or the upgrade setting parameter in the storage portion from outside via communication means.

The upgrade application may be the entire application programs currently present in the control device or only modules required for the version upgrade may be installed. That is, these application programs and parameters for update are used in the control device and programs and parameters not used by the accessory unit itself.

Moreover, the present invention (claim 4) is an invention of a vacuum pump, wherein the control device or the accessory unit includes a manual button for requesting start of upgrade and inquiry means for inquiring availability of the upgrade when the manual button is pressed, and when the upgrade is possible as a result of the inquiry by the inquiry means, the upgrade application or the upgrade setting parameter is read out of the storage portion, and the application or the setting parameter stored in the control device is updated.

By providing the inquiry means, when re-start is not needed, a plurality of set values can be changed at once or the like by one session of upgrade processing without power off.

Furthermore, the present invention (claim 5) is an invention of a vacuum pump, wherein the pump main body includes a magnetic bearing which magnetically floats a rotating body and a motor which rotates/drives the rotating body, and the control device is constituted by including a magnetic-bearing control portion which controls the magnetic bearing, a motor driving/control portion which drives/controls the motor, and a protection-function processing portion which controls the magnetic bearing in the magnetic-bearing control portion and monitors driving/control of the motor in the motor driving/control portion.

Furthermore, the present invention (claim 6) is an accessory unit in the vacuum pump which includes a pump main body and a control device in which an application which controls and monitors the pump main body and a setting parameter used during an operation of the application are stored, and in which at least one of the controlling and monitoring is executed via the control device, the accessory unit further including a storage portion which stores at least one of an upgrade application for upgrade of the application and an upgrade setting parameter for upgrade of the setting parameter, wherein the upgrade application or the upgrade setting parameter is read out of the storage portion when the pump main body is started, and the application or the setting parameter stored in the control device is updated.

As described above, according to the present invention (claim 1), since it is constituted by including the storage portion which stores at least one of the upgrade application and the upgrade setting parameter, when the pump main body is started, the upgrade application or the upgrade setting parameter is read out of the storage portion, and the application or the setting parameter stored in the control device is updated.

The upgrade application program and the upgrade setting parameter only need to be installed in the storage portion in advance, and the application program and parameter are read out at the next start of the pump and are automatically updated. And after this update, the start of the pump is continued. Thus, there is no more need to make adjustment or the like with respect to the schedule of maintenance on the apparatus side for the pump stop.
FIG. 1 is a constitutional diagram of a turbo-molecular pump, which is an embodiment of the present invention;
FIG. 2 is an entire appearance view;
FIG. 3 is an entire system configuration diagram;
FIG. 4 is installation of an application program or a parameter of a new version for update in an optional device as preparation;
FIG. 5 is a method of upgrade processing (No. 1);
FIG. 6 is a method of upgrade processing (No. 2); and
FIG. 7 is a diagram for explaining version upgrade of built-in software and a changing method of setting data which have been executed conventionally.

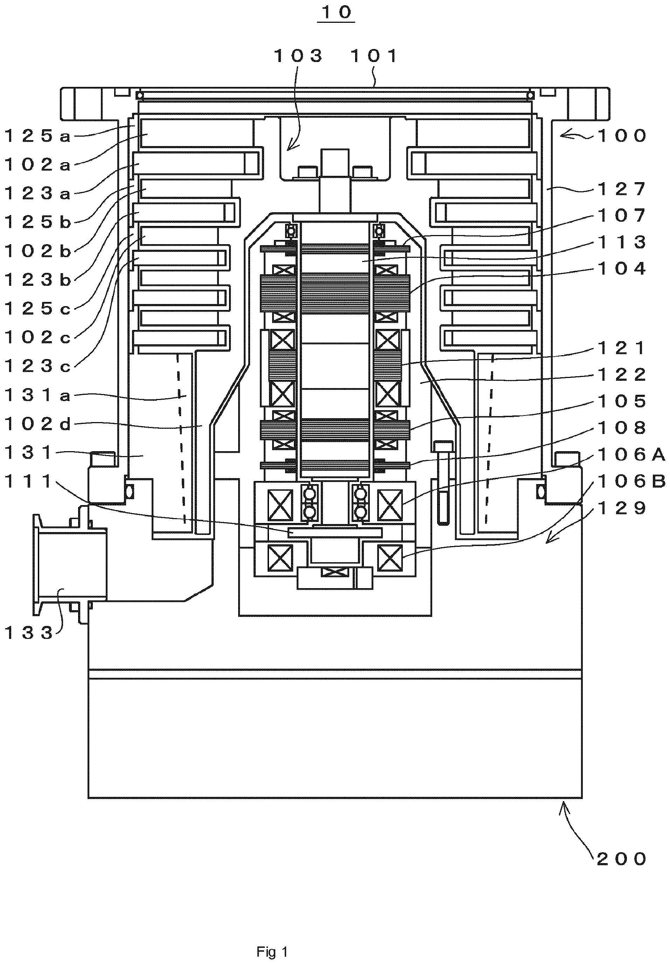

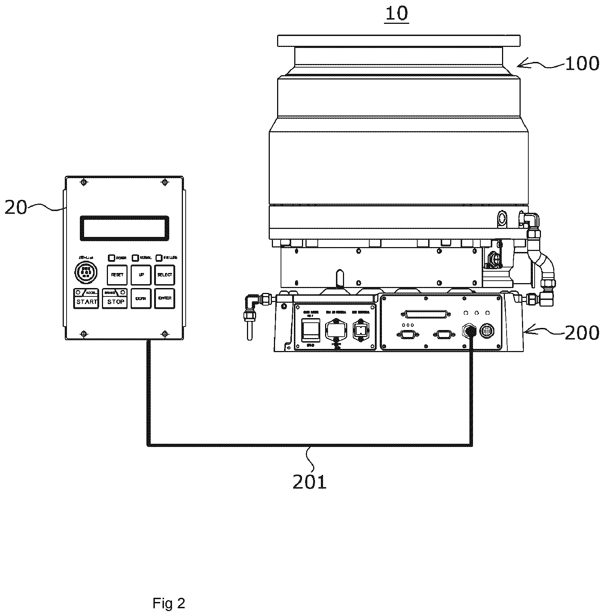

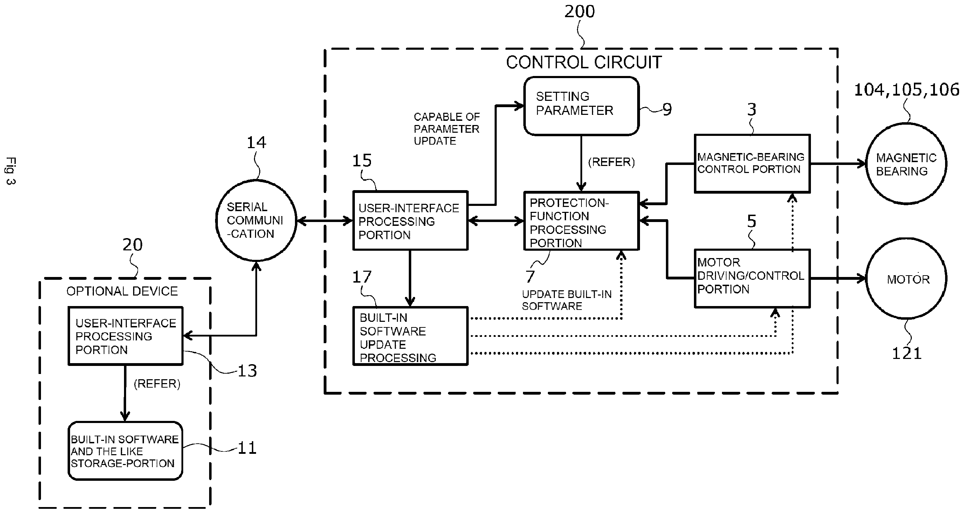

Hereinafter, an embodiment of the present invention will be described. A constitutional diagram of a turbo-molecular pump, which is an embodiment of the present invention, is shown in FIG. 1, an entire appearance view in FIG. 2, and an entire system configuration diagram in FIG. 3.

In FIG. 1 and FIG. 2, the turbo-molecular pump 10 is described such that a control device 200 is integrated with a pump main body 100, but this embodiment can be applied even if the pump main body 100 and the control device 200 are separate bodies.

In FIG. 1, an inlet port 101 is formed at an upper end of a cylindrical outer cylinder 127 of the pump main body 100. Inside the outer cylinder 127, a rotating body 103 in which a plurality of rotor blades 102a, 102b, 102c, ... by a turbine blade for sucking/exhausting a gas are formed radially and in multiple stages on a peripheral portion are provided.

At a center of this rotating body 103, a rotor shaft 113 is mounted, and this rotor shaft 113 is floated/supported in the air and position-controlled by a magnetic bearing of so-called five-axis control, for example.

In an upper-side radial electromagnet 104, four electromagnets are disposed by forming a pair on an X-axis and a Y-axis, which are coordinate axes in a radial direction of the rotor shaft 113 and are orthogonal to each other. An upper-side radial sensor 107 constituted by four electromagnets is included close to and correspondingly to this upper-side radial electromagnet 104. This upper-side radial sensor 107 is configured to detect a radial displacement of the rotor shaft 113 and to send it to the control device 200.

In a magnetic-bearing control portion 3 of the control device 200 shown in FIG. 3, on the basis of a displacement signal detected by the upper-side radial sensor 107, excitation of the upper-side radial electromagnet 104 is controlled via a compensation circuit having a PID adjustment function, and a radial position on an upper side of the rotor shaft 113 is adjusted.

The rotor shaft 113 is formed of a material with high magnetic permeability (iron or the like) or the like and is configured to be attracted by a magnetic force of the upper-side radial electromagnet 104. Such adjustment is made independently in an X-axis direction and in a Y-axis direction.

Moreover, a lower-side radial electromagnet 105 and a lower-side radial sensor 108 are disposed similarly to the upper-side radial electromagnet 104 and the upper-side radial sensor 107, and a radial position on a lower side of the rotor shaft 113 is adjusted by the magnetic-bearing control portion 3 similarly to the radial position on the upper side.

Furthermore, axial electromagnets 106A and 106B are disposed by vertically sandwiching a disc-shaped metal disc 111 provided on a lower part of the rotor shaft 113. The metal disc 111 is constituted of a material with high magnetic permeability such as iron. An axial sensor, not shown, is provided in order to detect an axial displacement of the rotor shaft 113, and it is configured such that a displacement signal thereof is sent to the magnetic-bearing control portion 3 of the control device 200.

And the axial electromagnets 106A and 106B are configured to be excited/controlled via the compensation circuit having the PID adjustment function of the magnetic-bearing control portion 3 on the basis of this axial displacement signal. The axial electromagnet 106A and the axial electromagnet 106B attract the metal disc 111 upward and downward, respectively, by the magnetic force.

As described above, in the magnetic-bearing control portion 3 of the control device 200, the axial electromagnets 106A and 106B adjust the magnetic force applied to the metal disc 111 as appropriate, magnetically float the rotor shaft 113 in the axial direction, and hold it in a space in a non-contact manner.

A motor 121 includes a plurality of magnetic poles disposed in a circumferential state so as to surround the rotor shaft 113. Each of the magnetic poles is controlled by a motor driving/control portion 5 so that it rotates/drives the rotor shaft 113 through an electromagnetic force acting between it and the rotor shaft 113.

With a slight clearance from the rotor blades 102a, 102b, 102c, ..., a plurality of stator blades 123a, 123b, 123c, ... are disposed. Each of the rotor blades 102a, 102b, 102c, ... is formed with inclination by a predetermined angle from a plane perpendicular to an axis of the rotor shaft 113 so as to transfer molecules of an exhaust gas thereof by a collision to a lower direction, respectively.

Moreover, the stator blades 123 are also formed similarly with inclination by a predetermined angle from the plane perpendicular to the axis of the rotor shaft 113 and they are disposed alternately with stages of the rotor blades 102 toward an inside of the outer cylinder 127. And respective ends of the stator blades 123 are supported in a state fitted and inserted between stator-blade spacers 125a, 125b, 125c, ... stacked in plural stages.

The stator-blade spacer 125 is a ring-shaped member and is constituted by metal such as aluminum, iron, stainless, copper or the like or an alloy containing these metals as components.

On an outer periphery of the stator-blade spacer 125, the outer cylinder 127 is fixed with a slight clearance. On a bottom part of the outer cylinder 127, a base portion 129 is disposed, and between a lower part of the stator-blade spacer 125 and the base portion 129, a threaded spacer 131 is disposed. And on a lower part of the threaded spacer 131 in the base portion 129, an outlet port 133 is formed and communicates with an outside.

The threaded spacer 131 is a cylindrical member constituted by metal such as aluminum, copper, stainless, iron or an alloy containing these metals as components, and a plurality of spiral thread grooves 131a are engraved on an inner peripheral surface thereof.

A spiral direction of the thread groove 131a is a direction in which, when the molecule of the exhaust gas is moved in a rotating direction of the rotating body 103, this molecule is transferred toward the outlet port 133.

On a lowest part continuing to the rotor blades 102a, 102b, 102c, ... of the rotating body 103, a cylinder portion 102d is suspended. An outer peripheral surface of this cylinder portion 102d has a cylindrical shape and is extended toward the inner peripheral surface of the threaded spacer 131 and is close to the inner peripheral surface of this threaded spacer 131 with a predetermined clearance.

The base portion 129 is a disc-shaped member constituting a bottom portion of the pump main body 100 in the turbo-molecular pump and is constituted by metal such as iron, aluminum, stainless or the like in general.

In such configuration, when the rotor blade 102 is driven by the motor 121 and is rotated together with the rotor shaft 113, by means of actions of the rotor blade 102 and the stator blade 123, the exhaust gas from the chamber is sucked through the inlet port 101.

The exhaust gas sucked through the inlet port 101 passes between the rotor blade 102 and the stator blade 123 and is transferred to the base portion 129. At this time, a temperature of the rotor blade 102 is raised by a friction heat generated when the exhaust gas contacts or collides with the rotor blade 102 or conduction or radiation of a heat generated in the motor 121, and this heat is conducted to the stator blade 123 side by radiation or conduction by a gas molecule or the like of the exhaust gas.

The stator-blade spacers 125 are joined to each other on outer peripheral portions and conduct a heat received by the stator blade 123 from the rotor blade 102 and the friction heat generated at contact or a collision of the exhaust gas against the stator blade 123 to the outer cylinder 127 or the threaded spacer 131.

The exhaust gas having been transferred to the threaded spacer 131 is sent to the outlet port 133 while being guided by the thread groove 131a.

Moreover, a periphery of an electric component portion is covered with a stator column 122 so that the gas sucked through the inlet port 101 does not intrude into the electric component portion side constituted by the motor 121, the lower-side radial electromagnet 105, the lower-side radial sensor 108, the upper-side radial electromagnet 104, the upper-side radial sensor 107 and the like, and an inside of the electric component portion is held at a predetermined pressure by a purge gas.

As shown in the entire appearance view in FIG. 2, an optional device 20 for remotely operating monitoring/control of the pump main body 100 is connected to the turbo-molecular pump 10 via the communication cable 201. The optional device 20 corresponds to the accessory unit.

In FIG. 2, the turbo-molecular pump 10 is an integral type in which the pump main body 100 and the control device 200 are combined, but the control device 200 does not have an operation panel or a display screen. There are only several LEDs and terminals. Displays of an operation state and a rotation number of the pump and operation buttons for start/stop and the like are disposed on the optional device 20 side.

In the entire system configuration diagram in FIG. 3, it is configured such that an operation state of the magnetic bearings 104, 105, and 106 in the magnetic-bearing control portion 3 and an operation state of the motor 121 in the motor driving/control portion 5 are sent to a protection-function processing portion 7. And in this protection-function processing portion 7, a setting parameter 9 needed for driving of the pump is read and managed so that the operation state of the magnetic bearings 104, 105, and 106 and the operation state of the motor 121 are contained within a set range on the basis of this setting parameter 9. Moreover, an alarm value is also included in the setting parameter 9, and the protection-function processing portion 7 executes processing of an alarm or stop or the like when the operation state of the magnetic bearings 104, 105, and 106 or the operation state of the motor 121 exceeds the alarm value.

In the optional device 20, other than the function for remotely operating the monitoring/control of the pump main body 100, a built-in software and the like storage-portion 11 and a user-interface processing portion 13 are disposed. However, a functional block diagram for a remote operation of the monitoring/control of the pump main body 100 is omitted in the figure. In the built-in software and the like storage-portion 11, new-version software and modules for updating the software currently stored in the magnetic-bearing control portion 3, the motor driving/control portion 5, and the protection-function processing portion 7 are stored. Moreover, similarly in this built-in software and the like storage-portion 11, new parameters for updating the parameters such as the setting values, alarm values and the like currently stored in the setting parameter 9 are also stored.

A user-interface processing portion 13 in the optional device 20 is connected to the user-interface processing portion 15 in the control device 200 via a serial communication 14. And the application program and parameter read out by the user-interface processing portion 13 from the built-in software and the like storage-portion 11 are sent by the user-interface processing portion 15 to a built-in software update processing portion 17, and various programs and parameters are updated by this built-in software update processing portion 17.

Subsequently, an action of this embodiment will be described.

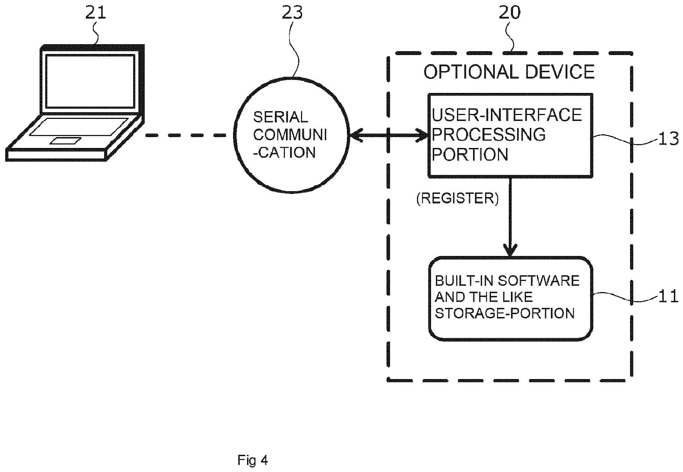

First, as preparation, as shown in FIG. 4, the personal computer 21 is connected to the existing optional device 20 via a serial communication 23 while the turbo-molecular pump 10 is operating, for example, and the new-version application program (corresponding to the upgrade application) or parameter (corresponding to the upgrade setting parameter) for updating the software currently stored in the magnetic-bearing control portion 3, the motor driving/control portion 5, and the protection-function processing portion 7 are installed in the built-in software and the like storage-portion 11 of the optional device 20.

The application program for update may be the entire application program currently in the control device 200 or only the modules required for the version upgrade may be installed. Moreover, the optional device 20 itself, in which the application program or parameter for update is installed in advance, may be replaced offline with another optional device . That is, the application program and parameter for update are used in the control device 200 and are the program and parameter not used in the optional device itself.

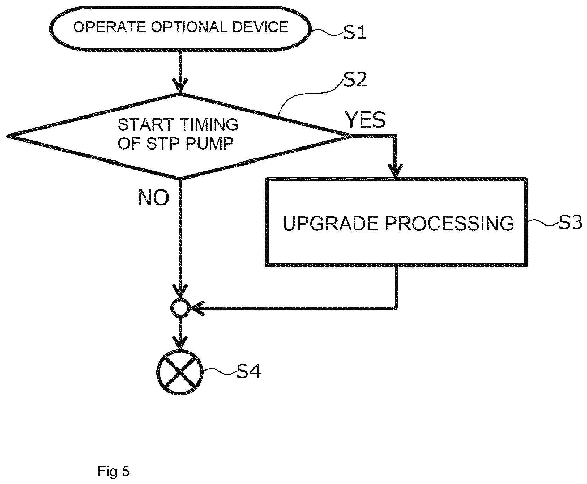

At Step 1 in FIG. 5 (indicated as Sl in the figure. The same applies to the following), a start instruction is sent from the optional device 20 to the turbo-molecular pump 10 which has been stopped. At Step 2, if this start instruction to the turbo-molecular pump 10 is detected, and there is data in the built-in software and the like storage-portion 11, the processing proceeds to Step 3, and the upgrade processing is executed. In this upgrade processing, the user-interface processing portion 13 of the optional device 20 reads the application program and the parameter stored in advance from the built-in software and the like storage-portion 11 at timing when the start instruction was detected. And the application program and parameter which have been read are transmitted to the user-interface processing portion 15 in the control device 200 via the serial communication 14.

And the application program received by the user-interface processing portion 15 is sent by this user-interface processing portion 15 to the built-in software update processing portion 17.

The built-in software update processing portion 17 updates the built-in software to the magnetic-bearing control portion 3, the motor driving/control portion 5, and the protection-function processing portion 7 in accordance with a type of the application program.

On the other hand, the parameter received by the user-interface processing portion 15 is sent to the setting parameter 9, and the parameters such as the setting value, an alarm value and the like stored herein are updated.

After that, the processing proceeds to Step 4, and a start operation of the pump is started on the basis of the updated application program and parameter. Note that, if there is no data in the built-in software and the like storage-portion 11 at Step 2, the upgrade processing is not executed but the pump is started as usual.

As described above, the application program or parameter can be updated without specially providing a storage device for updating the application program or parameter in the control device 200. Since it is only necessary that the optional device 20 including the built-in software and the like storage-portion 11 which is an external device is mounted, this can be applied also to the existing device and the like.

It is only necessary that the application program and parameter are installed in advance in the optional device 20, and the application program and parameter are read out at the next pump start and automatically updated. And the start of the pump is continued after this update. Thus, there is no more need to make adjustment or the like with respect to the schedule of maintenance on the apparatus side for the pump stop. The worker can perform the work at arbitrary timing regardless of this schedule.

Moreover, at the update of the application program or parameter, the vacuum system is not separated or disassembled any more.

The upgrade processing in a case of a small change of a program module or setting of a part of parameters and the like which does not need restart of the pump will be described. In this case, a manual button for requesting upgrade start, not shown, is provided on the optional device 20, and the upgrade of the built-in software can be performed by this manual button without turning off power of the pump.

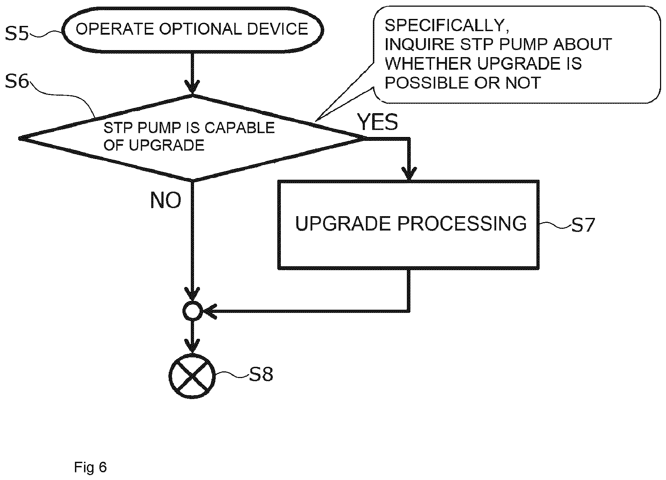

The processing at this time will be described on the basis of FIG. 6. At Step 5 in FIG. 6, the manual button of the optional device 20 is pressed while the pump is operating, for example.

At Step 6, the user-interface processing portion 13 of the optional device 20 makes an inquiry on whether the upgrade is possible or not to the user-interface processing portion 15 of the control device 200. And as the result of this inquiry, if a signal that the upgrade is possible arrives from the user-interface processing portion 15, the processing proceeds to Step 7, and necessary update of the application program or parameter is performed. A method of update processing at this time is similar to the explanation at Step 3. After that, the processing is continued with the updated application program or parameter at Step 8. On the other hand, if the signal that the upgrade is not possible arrives from the user-interface processing portion 15 at Step 6, the processing proceeds to Step 8, and the upgrade processing is not performed.

As a result, since restart is not needed, a plurality of setting values can be changed at once, for example, by one session of the upgrade processing without power off.

Note that the manual button does not necessarily have to be disposed in the optional device 20 but may be provided on the control device 200 side. Moreover, in a case where a unit is further disposed separately for temperature control, for example, it may be provided on the unit side.

However, if restart of the pump is needed at the upgrade, a signal that it is possible when the pump is stopped may be transmitted from the user-interface processing portion 15 to the user-interface processing portion 13.

This manual button operation from the optional device 20 is effective when the turbo-molecular pump 10 is disposed inside the apparatus, and the power cannot be turned ON/OFF easily, for example.

It is natural that the present invention is capable of various modification as long as the spirit of the present invention is not departed, and the present invention reaches also those modified ones.

- 3: Magnetic-bearing control portion
- 5: Motor driving/control portion
- 7: Protection-function processing portion
- 9: Setting parameter
- 10: Turbo-molecular pump
- 11: Built-in software and the like storage-portion
- 13, 15: User-interface processing portion
- 14, 23: Serial communication
- 17: Built-in software update processing portion
- 20: Optional device
- 21: Personal computer
- 100: Pump main body
- 103: Rotating body
- 104: Upper-side radial electromagnet
- 105: Lower-side radial electromagnet
- 106A, 106B: Axial electromagnet
- 107: Upper-side radial sensor
- 108: Lower-side radial sensor
- 121: Motor
- 200: Control device
- 201: Communication cable

## Claims

1. A vacuum pump comprising:
a pump main body;
a control device which stores an application for controlling and monitoring the pump main body and a setting parameter used during an operation of the application; and
a storage portion which stores at least one of an upgrade application for upgrade of the application and an upgrade setting parameter for upgrade of the setting parameter, wherein
when the pump main body is started, the upgrade application or the upgrade setting parameter is read out of the storage portion, and the application or the setting parameter stored in the control device is updated.

2. The vacuum pump according to claim 1, wherein
the storage portion is provided in an accessory unit capable of executing at least one of the controlling and monitoring the pump body via the control device.

3. The vacuum pump according to claim 1 or 2, wherein
storing means for installing and storing the upgrade application or the upgrade setting parameter with respect to the storage portion from outside via communication means.

4. The vacuum pump according to claim 2 or 3, wherein
the control device or the accessory unit includes a manual button for requesting start of upgrade and inquiry means for inquiring availability of the upgrade when the manual button is pressed; and
when the upgrade is possible as a result of the inquiry by the inquiry means, the upgrade application or the upgrade setting parameter is read out of the storage portion, and the application or the setting parameter stored in the control device is updated.

5. The vacuum pump according to any one of claims 1 to 4, wherein the pump main body includes:
a magnetic bearing which magnetically floats a rotating body; and
a motor which rotates/drives the rotating body, and
the control device includes:
a magnetic-bearing control portion which controls the magnetic bearing;
a motor driving/control portion which drives/controls the motor; and
a protection-function processing portion which controls the magnetic bearing in the magnetic-bearing control portion and monitors driving/control of the motor in the motor driving/control portion.

6. An accessory unit in a vacuum pump which includes:
a pump main body; and
a control device in which an application which controls and monitors the pump main body and a setting parameter used during an operation of the application are stored, and in which
at least one of the controlling and monitoring is executed via the control device,
the accessory unit further comprising a storage portion which stores at least one of an upgrade application for upgrade of the application and an upgrade setting parameter for upgrade of the setting parameter, wherein
when the pump main body is started, the upgrade application or the upgrade setting parameter is read out of the storage portion, and the application or the setting parameter stored in the control device is updated.
